# EUROPEAN PATENT SPECIFICATION

(11) **EP 2 066 730 B1**
(45) Date of publication and mention of the grant of the patent: **07.11.2012**
(21) Application number: 07838982.2
(22) Date of filing: 28.09.2007
(51) Int. Cl.: C08G 73/00, C09D 11/00, C08G 73/02

(54) **WATER SOLUBLE BRANCHED POLYETHYLENEIMINE COMPOSITIONS**
WASSERLÖSLICHE VERZWEIGTE POLYETHYLENIMIN-ZUSAMMENSETZUNG
COMPOSITIONS DE POLYÉTHYLÈNEIMINE RAMIFIÉ HYDROSOLUBLE

(30) Priority: 29.09.2006 US 536909
(43) Date of publication of application: 10.06.2009
(73) Proprietor: Eastman Kodak Company, Rochester, NY 14650-2201 (US)
(72) Inventor: BOTROS, Raouf, Centerville, OH 45459 (US); HUANG, Tom Nuh-tome, Beavercreek, OH 45434 (US); TOBIAS, Russell H., Centerville, OH 45452 (US); FOSSUM, Eric A., Middletown, OH 45044 (US)
(74) Representative: Weber, Etienne Nicolas
(86) International application number: PCT/US2007/020919
(87) International publication number: WO 2008/042253

(56) References cited:
- EP-A- 1 454 964
- DE-A1- 10 026 466
- US-A- 4 789 400
- US-A- 5 017 644
- US-A- 5 364 462
- US-A- 5 425 805
- US-A1- 2008 078 304

## Description

### FIELD OF THE INVENTION

The present invention refers to the area of inkjet printing, and more particularly to compositions for coating or printing on a substrate, comprising a liquid vehicle and a water soluble branched polyethyleneimine comprising amino groups which have been alkylated or hydroxyalkylated. In a specific embodiment, the invention relates to a waterfast, dye-based ink suitable for inkjet printing (such as continuous inkjet) with improved optical density.

### BACKGROUND OF THE INVENTION

In continuous ink jet (CIJ) printing, the ink is supplied under pressure to a manifold region that distributes the ink to a plurality of orifices, typically arranged in a linear array(s). The ink discharges from the orifices in filaments which break into droplet streams. The approach for printing with these droplet streams is to selectively charge and deflect certain drops from their normal trajectories. Graphic reproduction is accomplished by selectively charging and deflecting drops from the drop streams and depositing at least some of the drops on a print receiving medium while other drops strike a drop catcher device. The continuous stream ink jet printing process is described, for example, in U.S. Pat. Nos. 4,255,754; 4,698,123 and 4,751,517.

Generally, an ink for use in a CIJ system is required to have high waterfastness (reduced tendency to wick or bleed on a substrate when subjected to moisture) with excellent optical density and color tone, and yet be sufficiently fluid as to allow jetting through the nozzle. In the ink jet printing art, inks containing the water soluble dyes typically employed have the desired viscosity for runnability but are not considered to have a high degree of waterfastness. Typically, the solubility of the dye and the degree of ink waterfastness are inversely related. Polymers and resins may be added to the ink solution to enhance adhesion to the substrate and increase waterfastness. However, these polymers and resins also have the adverse affect of creating deposits on the printhead orifice and charge plates, adversely affecting machine runnability by increasing viscosity, and sufficiently high levels may have limited solubility.

Increasing the dye concentration in the ink in order to improve the optical density is limited by the solubility of the dye. If the solubility limit of the dye is exceeded the dye tends to crystallize out onto the orifice plate, causing crooked jets and poor runnability. Furthermore, the optical density of colors in general tends to level off at certain concentration and adding more dye will have no effect on improving the optical density.

Polyethyleneimine (PEI) is often employed in ink compositions to increase waterfastness; however, PEI may decrease the solubility of the dye or worse, degrade the dye (reduction of the azo-linkage, which is the chemical group responsible for the color of the ink by the primary amino-group functional groups of PEI). Alkylation or hydroxyalkylation of the primary amino-group of branched polyethyleneimine has been suggested to decrease the ability of PEI to reduce the azo-linkage and preserve the dye. Unfortunately, as the percentage of alkylated/hydroxyalkylated primary and secondary amino-groups increase, the polymer becomes less soluble in water and precipitates out.

U.S. Pat. No. 5,017,644 discloses ink jet ink compositions which contain linear N-hydroxyethyl substituted polyethyleneimine polymers, and teaches using branched polymers gives results which are inferior in terms of waterfastness and lightfastness to those using linear polymers. Unfortunately, linear polymers are not commercially available, since the normal polymerization product of ethylenimine has random side branches, which upon ethoxylation gives branched N-hydroxyethyl polyethyleneimine.

It is seen then that there is still a need for improved compositions for coating or printing on a substrate, which would enable improved waterfast dye images printed with ink jet recording equipment.

### SUMMARY OF THE INVENTION

In one embodiment, the invention is directed towards a composition for coating or printing on a substrate, comprising a liquid vehicle, an anionic dye soluble in the liquid vehicle and a water soluble branched polyethyleneimine comprising amino groups which have been alkylated, wherein the branched polyethyleneimine prior to alkylation comprises a combination of primary, secondary and tertiary amino groups, and wherein at least 1 % of the primary amino groups of the branched polyethyleneimine polymer are alkylated with at least one alkyl group having 4-6 carbon atoms.

The invention is directed towards a composition comprising an anionic dye soluble in the liquid vehicle, which composition provides a waterfast, dye-based ink that is suitable for inkjet printing, and particularly to continuous inkjet printing. In a further aspect of a specific embodiment, a dimethylaminoethanol ("DMAE") base is included in an amount sufficient to provide a pH of above 10 and discourage electrostatic interactions between the polyethyleneimine and the dye.

### DETAILED DESCRIPTION OF THE INVENTION

The composition of the present invention comprises a liquid vehicle and a water soluble alkylated branched polyethyleneimine. Prior to alkylation, branched polyethyleneimines comprise a combination of primary, secondary and tertiary amino groups, typically in a molar ratio of approximately 1:2:1. In accordance with the invention, at least 1% of the primary amino groups of the branched polyethyleneimine polymer are alkylated with at least one alkyl group having 4-6 carbon atoms. In a preferred embodiment, at least 3 mole percent of the substitutable hydrogens of the primary and secondary amino groups of the branched polyethyleneimine are alkylated with alkyl groups having 4-6 carbon atoms. Specific examples of such compounds include hexylated-PEI.

When employing alkyl groups having 4-6 carbon atoms, to maintain adequate solubility it is preferred that only 1-10 mole percent of the substitutable hydrogens of the amino groups of the branched polyethyleneimine are alkylated with such alkyl groups. In such case, in a further preferred embodiment at least 5 percent of the remaining substitutable hydrogens of the amino groups of the branched polyethyleneimine may be hydroxyalkylated with hydroxyalkyl groups having 1-3 carbon atoms. In a specific preferred embodiment, 1-10 mole percent of the substitutable hydrogens of the amino groups of the branched polyethyleneimine may be alkylated with hexyl groups and any amino groups of the branched polyethyleneimine having remaining substitutable hydrogens may be fully hydroxyethylated.

Alkylated and alkylated/hydroxyalkylated branched polyethyleneimine polymers employed in the present invention may be prepared by alkylating and/or hydroxyalkylating commercially available branched PEI polymers employing conventional alkylation and hydroxyalkylation chemistry.

When employed with anionic water soluble dyes, such specific branched polyethyleneimine polymers comprising such 4-6 carbon atom alkyl substituents have been found to surprisingly result in increased optical density, as well as providing additionally desired attributes of improved waterfastness. By limiting the length of the alkyl groups, and or the amount of substitution with such specific substituents, the solubility of the PEI derivatives may be controlled so as also not to be substantially detrimentally altered as compared to the unsubstituted derivatives.

Branched polyethyleneimine polymers employed in accordance with the invention typically will have a molecular weight range of approximately 10,000 to 60,000, although lower or higher molecular weight polymers may also be useful.

By incorporating an anionic dye soluble in the liquid vehicle, compositions in accordance with the invention provide waterfast, dye-based ink that is suitable for inkjet printing. The use of a dye based ink is preferable in compositions of the invention, as the viscosity of the solutions allows for runnability in a CIJ printing system. The dye in the ink jet ink composition of such embodiment of the present invention is water soluble and preferably selected from the group consisting of Direct Dyes, Acid Dyes, and Food Dyes. For ink jet ink compositions, the water soluble branched polyethyeleneimine polymer is preferably present in an amount of from 0.5 to 5.0 % by dry weight basis, and the anionic dye is preferably present in an amount of from 1.0 to 5.0% by dry weight basis, more preferably between 2% and 4% by weight.

While the coating composition of the invention includes a dye to form an ink composition, compositions without dye incorporated therein are also useful, and may be employed, e.g., to be coated or printed on a substrate either before or after printing of a dye composition in order to improve the properties of the printed dye. In accordance with a further aspect, the present invention is accordingly also directed towards a medium for printing an ink jet image on, comprising a substrate and a surface layer comprising an alkylated branched polyethyleneimine coated from a composition comprising a liquid vehicle and a water soluble branched polyethyleneimine comprising amino groups which have been alkylated, wherein the branched polyethyleneimine prior to alkylation comprises a combination of primary, secondary and tertiary amino groups, and wherein at least 1% of the primary groups of the branched polyethyleneimine polymer are alkylated with at least one alkyl group having 4-6 carbon atoms.

It is understood and known in the art that waterfastness is substrate dependent. The composition of the present invention is particularly adaptable for incorporation into an ink jet printing apparatus for forming images by causing the ink to be expelled as droplets onto a substrate, thereby generating an image on a wide variety of substrates. Additionally, the present invention allows for the addition of other chemicals necessary for particular substrates. For example, when necessitated, a surfactant may be added when high gloss substrates are used. It will be appreciated that while inclusion of a PEI polymer increases waterfastness, there may also be premature interaction between the anionic dye and the cationic PEI while within the drop generator. Thus, it is preferred to prevent this interaction until it becomes desirable. In a further aspect of such embodiment, a dimethylaminoethanol ("DMAE") base may be included in an amount sufficient to provide a pH of above 10 to reduce the cationic charge on the polymer to a minimum and discourage electrostatic interactions between the polyethyleneimine and the dye. After jetting, the DMAE evaporates, reducing the pH and allowing the PEI and dye to interact and create a waterfast ink.

In some systems, it may be anticipated that other chemicals may be required for proper application of the present ink formulation. For example, defoamers, biocides to reduce bacterial growth, anticorrosion to protect hardware, surfactant which are dependent upon the desired substrate, alcohols, buffers, and etc of which aid in the specialization of the ink formulation for a particular usage. In particular embodiments, e.g., other additives that may optionally be included in the compositions of the invention include a corrosion inhibitor in an amount from 0 to 0.2 wt. % such as an alkanolamino-group; a wetting agent of from 0 to 1 wt. %, such as an ethoxylated glycol ether; a lower alphatic alcohol having one hydroxy group and up to five carbon atoms in a straight or branched chain in an amount of 0 to 10 wt. %; and a biocide from 0 to 0.5 wt. % such as dehydroacetic acid. The compositions may also include an optional defoamer such as phosphate esters, silicone or non-silicone defoamer or acetylenic diol.

The following synthesis examples are provided as representative of techniques for preparation of alkylated, and alkylated/hydroxyalkylated branched polyethyleneimine polymers that may be employed in the present invention. As indicated above, such polymers may be prepared from commercially available branched PEI polymers employing conventional alkylation and hydroxyalkylation chemistry.

### Synthesis of 7% Hexylated Polyethyleneimine:

18 g of branched polyethyleneimine (PEI) was dissolved in 180 ml of THF. 4.11 ml of hexylbromide was added to the solution, and the reaction refluxed for 48 hours at 75-85 C. After 48 hours, 1.16 g of NaOH was dissolved in MeOH and the solution was added to the reaction as it continued to reflux for 24 hours. Once completed, the reaction was allowed to settle for 24 hours, filtered, and solvent was removed on a rotary evaporator. The resulting yellow sample was dried under vacuum, resulting in 7% hexylated branched polyethyleneimine (7% HPEI).

### Synthesis of 7% Hexylated/23% Hydroxypropylated Polyethyleneimine:

15 g of 7% hexylated branched polyethyleneimine (7% HPEI) was dissolved in 125 ml of ethanol. 25 ml of rinse, alongside the solution and a bomb container, were allowed to sparge with N₂ for 12-15 min. Each was added to the bomb along with 4.09 ml of propylene oxide. The reaction was heated to 60 C (5-7 hours) and then allowed to cool overnight. Once removed from the bomb, the reaction was evaporated for 24 hours and was dissolved in H₂O and transferred to 8k MWCO dialysis tubing for 48 hours. The sample was then dried down to a desired percentage of solid in solution for delivery. GPC MW: 3,260. PDI: 1.944.

### Synthesis of 7% Hexylated/43% Hydroxypropylated Polyethyleneimine:

15 g of 7% hexylated branched polyethyleneimine (7% HPEI) was dissolved in 125 ml of ethanol. 25 ml of rinse, alongside the solution and a bomb container, were allowed to sparge with N₂ for 12-15 min. Each was added to the bomb along with 7.66 ml of propylene oxide. The reaction was heated to 60 C (5-7 hours) and then allowed to cool overnight. Once removed from the bomb, the reaction was evaporated for 24 hours and was dissolved in H₂O and transferred to 8k MWCO dialysis tubing for 48 hours. The sample was then dried down to a desired percentage of solid in solution for delivery. GPC MW: 3,278. PDI: 1.885.

An ink made in accordance with an embodiment of the present invention may be manufactured as follows:

### INK PREPARATIONS

The following preparations provide a comparison of use of alkylated and hydroxyalkylated branched polyethyleneimines with a currently used ink formulation, such as the Kodak FD1096 black ink. Alkylation in accordance with the current invention provides the benefit of substituted primary and secondary amino-groups without losing substantial solubility, while also providing greater optical density. In each example, the category of "Other" designates convention biocide, alcohol, glycol, or other additive. In Comparative Examples 1-3, the branched PEI employed in each case was fully hydroxyalkylated.

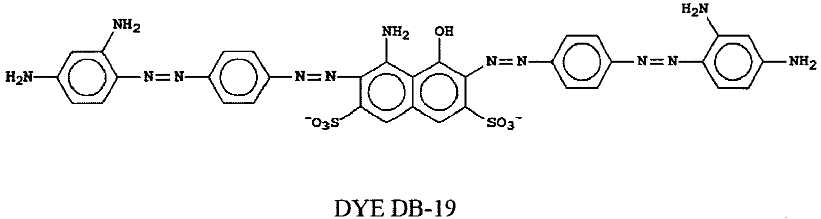

### Comparative Example 1

| Component | Weight % |
|---|---|
| Hydroxyethylated PEI (36wt% solution) | 5.58 |
| DMAE | 2.40 |
| Dye (DB-19) (19% Solution) | 20.80 |
| Surfactant | 0.30 |
| Defoamer | 0.01 |
| Other | 2.40 |
| Water | 68.51 |

### Comparative Example 2

| Component | Weight % |
|---|---|
| Hydroxypropylated PEI (36wt% solution) | 5.58 |
| DMAE | 2.40 |
| Dye (DB-19) (19% Solution) | 20.80 |
| Surfactant | 0.30 |
| Defoamer | 0.01 |
| Other | 2.40 |
| Water | 68.51 |

### Comparative Example 3

| Component | Weight % |
|---|---|
| Hydroxybutylated PEI (36wt% solution) | 5.58 |
| DMAE | 2.40 |
| Dye(DB-19) (19% solution) | 20.80 |
| Surfactant | 0.30 |
| Defoamer | 0.01 |
| Other | 2.40 |
| Water | 68.51 |

To determine the effectiveness of each solution in each comparative example above, the solutions were applied onto a variety of substrates with a #6 drawn down rod, including Laser MOCR Bond, Sterling Ultra Gloss, Smart Paper Kromekote, IP Carolina Cover C1S, and UPM Digibright/Brite 72. The inked substrates were then evaluated for waterfastness and print intensity. While repeat measurements were taken at 0, 24, and 48 hours, only the initial evaluation results are shown below, as one skilled in the art will appreciate that waterfastness and optical density improve with drying time. The results are summarized below, wherein optical density/waterfastness are provided for each substrate:

| **Substrate** | **Hydroxyethylated PEI** | **Hydroxypropylated PEI** | **Hydroxybutylated PEI** |
|---|---|---|---|
| Laser MOCR bond | 0.95/95% | 0.93/98% | 0.94/99% |
| Sterling Ultra Gloss | 1.26/74% | 1.34/78% | 1.43/96% |
| Smart Papers Kromekote | 1.14/93% | 1.24/97% | 1.47/100% |
| Carolina Cover C1S | 1.25/93% | 1.32/94% | 1.49/98% |
| UPM Digibright/ Brite 72 | 0.94/96% | 0.94/96% | 0.95/99% |

As can be determined from the results above, the optical density and waterfastness remain highly dependent upon the selected substrate. The four-carbon hydroxyalkyl- derivative, however, showed the overall best optical density and waterfastness by a significant margin, especially on the coated substrates.

Alkylated PEI derivatives were also prepared with varying degrees of amino-group substitution. For the following examples, 3, 5, and 7% hexylated polyethyleneimine were used.

### Example 4

| Component | Weight % |
|---|---|
| 3% Hexylated PEI (36wt% solution) | 5.58 |
| DMAE | 2.40 |
| Dye (DB-19) (19% solution) | 20.80 |
| Surfactant | 0.30 |
| Defoamer | 0.01 |
| Other | 2.40 |
| Water | 68.51 |

### Example 5

| Component | Weight % |
|---|---|
| 5% Hexylated PEI (36wt% solution) | 5.58 |
| DMAE | 2.40 |
| Dye (DB-19) (19% solution) | 20.80 |
| Surfactant | 0.30 |
| Defoamer | 0.01 |
| Other | 2.40 |
| Water | 68.51 |

### Example 6

| Component | Weight % |
|---|---|
| 7% Hexylated PEI (36wt% solution) | 5.58 |
| DMAE | 2.40 |
| Dye (DB-19) (19% solution) | 20.80 |
| Surfactant | 0.30 |
| Defoamer | 0.01 |
| Other | 2.40 |
| Water | 68.51 |

Example solutions were treated similar to manner described above, and the results include:

| **Substrate** | **Hydroxyeth ylated PEI** | **3% Hexylated PEI** | **5% Hexylated PEI** | **7% Hexylated PEI** |
|---|---|---|---|---|
| Laser MOCR bond | 0.93/97% | 0.94/99% | 0.93/101% | 0.95/100% |
| Sterling Ultra Gloss | 1.2/79% | 1.28/86% | 1.3/92% | 1.33/94% |
| Smart Papers Kromekote | 1.0/86% | 1.36/103% | 1.42/103% | 1.47/104% |
| Carolina Cover C1S | 1.22/91% | 1.43/100% | 1.42/99% | 1.48/99% |
| UPM Digibright/ Brite 72 | 0.92/98% | 0.94/101% | 0.95/102% | 0.97/101% |

Optical density and waterfastness for the hexylated PEI were drastically increased as compared to the standard hydroxyethylated PEI derivative traditionally used in inks. While the percentage of alkylation of the amino-groups made slight differences in the observed values on some substrates, generally, there was a significant increase in the observed values on the coated substrates with increased alkylation.

Partially alkylated and partially hydroxyalkylated PEI derivatives were also prepared with varying degrees of amino-group substitution. For the following examples, 7% hexylated and either 23% or 43% hydroxypropylated polyethyleneimine were used.

### Example 7

| Component | Weight % |
|---|---|
| 7% Hexylated, 23% Hydroxypropylated | |
| PEI (10wt% solution) | 20.00 |
| DMAE | 2.40 |
| Dye (DB-19) (19% solution) | 20.80 |
| Surfactant | 0.30 |
| Defoamer | 0.01 |
| Water | 56.49 |

### Example 8

| Component | Weight % |
|---|---|
| 7% Hexylated, 43% Hydroxypropylated | |
| PEI (10wt% solution) | 20.00 |
| DMAE | 2.40 |
| Dye(DB-19) (19% solution)) | 20.80 |
| Surfactant | 0.30 |
| Defoamer | 0.01 |
| Water | 56.49 |

Example solutions were treated similar to manner described above, and the average optical density/waterfastness results for coated substrates and uncoated substrates are reported below:

| **Substrate** | 7% Hexylated, 23% Hydroxypropylated PEI | 7% Hexylated, 43% Hydroxypropylated PEI |
|---|---|---|
| coated | 1.61/99% | 1.50/97% |
| uncoated | 0.96/100% | 0.97/100% |

Optical density and waterfastness for the hexylated/hydroxypropylated PEI were drastically increased as compared to results previously reported for the standard hydroxyethylated PEI derivative traditionally used in inks, and even further improved relative to the results for the individually hexylated or hydroxypropylated PEI examples previously reported.

### INDUSTRIAL APPLICABILITY AND ADVANTAGES

The present invention is useful in the field of ink jet printing, and has the advantage of formulating a modified composition for coating or printing for use in ink jet printing which has increased composition solubility and increased printed ink waterfastness.

## Claims

1. A composition for coating or printing on a substrate, comprising a liquid vehicle, an anionic dye soluble in the liquid vehicle, and a water soluble branched polyethyleneimine comprising amino groups which have been alkylated, wherein the branched polyethyleneimine prior to alkylation comprises a combination of primary, secondary and tertiary amino groups, and wherein at least 1% of the primary amino groups of the branched polyethyleneimine polymer are alkylated with at least one alkyl group having 4-6 carbon atoms.

2. A composition according to claim 1 wherein at least 3 mole percent of the substitutable hydrogens of the primary and secondary amino groups of the branched polyethyleneimine are alkylated with alkyl groups having 4-6 carbon atoms.

3. A composition according to claim 1 wherein 1-10 mole percent of the substitutable hydrogens of the amino groups of the branched polyethyleneimine are alkylated with an alkyl group having 4-6 carbon atoms.

4. A composition according to claim 3, wherein at least 5 percent of the substitutable hydrogens of the amino groups of the branched polyethyleneimine are hydroxyalkylated with hydroxyalkyl groups having 1-3 carbon atoms.

5. A composition according to claim 3, wherein 1-10 mole percent of the substitutable hydrogens of the amino groups of the branched polyethyleneimine are alkylated with hexyl groups and at least 5 percent of the substitutable hydrogens of the amino groups of the branched polyethyleneimine are hydroxyalkylated with hydroxyalkyl groups having 1-3 carbon atoms.

6. A composition according to claim 3, wherein 1-10 mole percent of the substitutable hydrogens of the amino groups of the branched polyethyleneimine are alkylated with hexyl groups and wherein any amino groups of the branched polyethyleneimine having remaining substitutable hydrogens are fully hydroxyethylated.

7. A composition according to claim 1, further comprising a dimethylaminoethanol base, and wherein the composition has a pH of above 10.

8. A composition according to claim 7 wherein the water soluble branched polyethyeleneimine polymer is present in an amount of from 0.5 to 5.0 % by dry weight basis, and the anionic dye is present in an amount of from 1.0 to 5.0% by dry weight basis.

9. A medium for printing an ink jet dye image on, comprising a substrate and a surface layer comprising an alkylated branched polyethyleneimine coated from a composition comprising a liquid vehicle and a water soluble branched polyethyleneimine comprising amino groups which have been alkylated, wherein the branched polyethyleneimine prior to alkylation comprises a combination of primary, secondary and tertiary amino groups, and wherein at least 1% of the primary amino groups of the branched polyethyleneimine polymer are alkylated with at least one alkyl group having 4-6 carbin atoms.

10. A medium according to claim 9 wherein at least 3 mole percent of the substitutable hydrogens of the primary and secondary amino groups of the branched polyethyleneimine are alkylated with alkyl groups having 4-6 carbon atoms.

11. A medium according to claim 9 wherein 1-10 mole percent of the substitutable hydrogens of the amino groups of the branched polyethyleneimine are alkylated with an alkyl group having 4-6 carbon atoms.

12. A medium according to claim 11, wherein at least 5 percent of the substitutable hydrogens of the amino groups of the branched polyethyleneimine are hydroxyalkylated with hydroxyalkyl groups having 1-3 carbon atoms.

## Patentansprüche

1. Zusammensetzung zum Beschichten oder Drucken auf einem Substrat mit einer flüssigen Trägersubstanz, einem anionischen, in der flüssigen Trägersubstanz löslichen Farbstoff und einem wasserlöslichen, verzweigten Polyethylenimin, das Aminogruppen umfasst, die alkyliert sind, worin das verzweigte Polyethylenimin vor dem Alkylieren eine Kombination aus primären, sekundären und tertiären Aminogruppen umfasst und worin mindestens 1 % der primären Aminogruppen des verzweigten Polyethyleniminpolymers mit mindestens einer Alkylgruppe alkyliert sind, die 4 bis 6 Kohlenstoffatome umfasst.

2. Zusammensetzung nach Anspruch 1, worin mindestens 3 Mol% der substituierbaren Wasserstoffe der primären und sekundären Aminogruppen des verzweigten Polyethylenimins mit Alkylgruppen aus 4 bis 6 Kohlenstoffatomen alkyliert sind.

3. Zusammensetzung nach Anspruch 1, worin 1 bis 10 Mol% der substituierbaren Wasserstoffe der Aminogruppen des verzweigten Polyethylenimins mit Alkylgruppen aus 4 bis 6 Kohlenstoffatomen alkyliert sind.

4. Zusammensetzung nach Anspruch 3, worin mindestens 5 % der substituierbaren Wasserstoffe der Aminogruppen des verzweigten Polyethylenimins mit Hydroxyalkylgruppen aus 1 bis 3 Kohlenstoffatomen hydroxyalkyliert sind.

5. Zusammensetzung nach Anspruch 3, worin 1 bis 10 Mol% der substituierbaren Wasserstoffe der Aminogruppen des verzweigten Polyethylenimins mit Hexylgruppen und mindestens 5 % der substituierbaren Wasserstoffe der Aminogruppen des verzweigten Polyethylenimins mit Hydroxyalkylgruppen aus 1 bis 3 Kohlenstoffatomen hydroxyalkyliert sind.

6. Zusammensetzung nach Anspruch 3, worin 1 bis 10 Mol% der substituierbaren Wasserstoffe der Aminogruppen des verzweigten Polyethylenimins mit Hexylgruppen alkyliert sind und worin beliebige Aminogruppen des verzweigten Polyethylenimins, die verbleibende substituierbare Wasserstoffe aufweisen, vollständig hydroxyalkyliert sind.

7. Zusammensetzung nach Anspruch 1, die zudem eine Dimethylaminoethanolbase umfasst und worin die Zusammensetzung einen pH-Wert von über 10 aufweist.

8. Zusammensetzung nach Anspruch 7, worin das wasserlösliche, verzweigte Polyethyleniminpolymer in einer Menge von 0,5 bis 5,0 %, bezogen auf das Trockengewicht, vorhanden ist, und worin der anionische Farbstoff in einer Menge von 1,0 bis 5,0 %, bezogen auf das Trockengewicht, vorhanden ist.

9. Mittel zum Drucken eines Tintenstrahlfarbstoffbildes mit einem Substrat und einer Oberfläche, das ein alkyliertes, verzweigtes Polyethylenimin umfasst, aufgetragen aus einer Zusammensetzung, die eine flüssige Trägersubstanz und ein wasserlösliches, verzweigtes Polyethylenimin umfasst, das Aminogruppen umfasst, die alkyliert sind, worin das verzweigte Polyethylenimin vor der Alkylierung eine Kombination aus primären, sekundären und tertiären Aminogruppen umfasst und worin mindestens 1 % der primären Aminogruppen des verzweigten Polyethyleniminpolymers mit mindestens einer Alkylgruppe mit 4 bis 6 Kohlenstoffatomen alkyliert sind.

10. Mittel nach Anspruch 9, worin mindestens 3 Mol% der substituierbaren Wasserstoffe der primären und sekundären Aminogruppen des verzweigten Polyethylenimins mit Alkylgruppen aus 4 bis 6 Kohlenstoffatomen alkyliert sind.

11. Mittel nach Anspruch 9, worin 1 bis 10 Mol% der substituierbaren Wasserstoffe der Aminogruppen des verzweigten Polyethylenimins mit einer Alkylgruppe aus 4 bis 6 Kohlenstoffatomen alkyliert sind.

12. Mittel nach Anspruch 11, worin mindestens 5 % der substituierbaren Wasserstoffe der Aminogruppen des verzweigten Polyethylenimins mit Hydroxyalkylgruppen aus 1 bis 3 Kohlenstoffatomen hydroxyalkyliert sind.

## Revendications

1. Composition de revêtement ou d'impression sur un substrat, comprenant un véhicule liquide, un colorant anionique soluble dans le véhicule liquide et une polyéthylèneimine ramifiée soluble dans l'eau comprenant des groupes amino qui ont été alkylés, dans laquelle la polyéthylèneimine ramifiée comprend, avant l'alkylation, une combinaison de groupes amino primaires, secondaires et tertiaires, et dans laquelle au moins 1 % des groupes amino primaires du polymère de polyéthylèneimine ramifiée sont alkylés par au moins un groupe alkyle ayant 4 à 6 atomes de carbone.

2. Composition selon la revendication 1, dans laquelle au moins 3 pourcent en moles des atomes d'hydrogène substituables des groupes amino primaires et secondaires de la polyéthylèneimine ramifiée sont alkylés par des groupes alkyle ayant 4 à 6 atomes de carbone.

3. Composition selon la revendication 1, dans laquelle 1 à 10 pourcent en moles des atomes d'hydrogène substituables des groupes amino de la polyéthylèneimine ramifiée sont alkylés par un groupe alkyle ayant 4 à 6 atomes de carbone.

4. Composition selon la revendication 3, dans laquelle au moins 5 pourcent en moles des atomes d'hydrogène substituables des groupes amino de la polyéthylèneimine ramifiée sont hydroxyalkylés par des groupes hydroxyalkyle ayant 1 à 3 atomes de carbone.

5. Composition selon la revendication 3, dans laquelle 1 à 10 pourcent en moles des atomes d'hydrogène substituables des groupes amino de la polyéthylèneimine ramifiée sont alkylés par des groupes hexyle et au moins 5 pourcent des atomes d'hydrogène substituables des groupes amino de la polyéthylèneimine ramifiée sont hydroxyalkylés par des groupes hydroxyalkyle ayant 1 à 3 atomes de carbone.

6. Composition selon la revendication 3, dans laquelle 1 à 10 pourcent en moles des atomes d'hydrogène substituables des groupes amino de la polyéthylèneimine ramifiée sont alkylés par des groupes hexyle et dans laquelle tous les groupes amino de la polyéthylèneimine ramifiée ayant d'autres atomes d'hydrogène substituables sont entièrement hydroxyéthylés.

7. Composition selon la revendication 1, comprenant aussi une base diméthylaminoéthanol, et dans laquelle la composition a un pH supérieur à 10.

8. Composition selon la revendication 7, dans laquelle le polymère de polyéthylèneimine ramifiée soluble dans l'eau est présent en une quantité comprise entre 0,5 et 5,0 % en poids à sec, et le colorant anionique est présent en une quantité comprise entre 1,0 et 5,0 % en poids à sec.

9. Support pour l'impression d'une image de colorants par jet d'encre, comprenant un substrat et une couche superficielle comprenant une polyéthylèneimine ramifiée alkylée appliquée à partir d'une composition comprenant un véhicule liquide et une polyéthylèneimine ramifiée soluble dans l'eau comprenant des groupes amino qui ont été alkylés, dans laquelle la polyéthylèneimine ramifiée comprend, avant l'alkylation, une combinaison de groupes amino primaires, secondaires et tertiaires, et dans laquelle au moins 1 % des groupes amino primaires du polymère de polyéthylèneimine ramifiée sont alkylés par au moins un groupe alkyle ayant 4 à 6 atomes de carbone.

10. Support selon la revendication 9, dans lequele au moins 3 pourcent en moles des atomes d'hydrogène substituables des groupes amino primaires et secondaires de la polyéthylèneimine ramifiée sont alkylés par des groupes alkyle ayant 4 à 6 atomes de carbone.

11. Support selon la revendication 9, dans lequel 1 à 10 pourcent en moles des atomes d'hydrogène substituables des groupes amino de la polyéthylèneimine ramifiée sont alkylés par un groupe alkyle ayant 4 à 6 atomes de carbone.

12. Support selon la revendication 11, dans lequel au moins 5 pourcent des atomes d'hydrogène substituables des groupes amino de la polyéthylèneimine ramifiée sont hydroxyalkylés par des groupes hydroxyalkyle ayant 1 à 3 atomes de carbone.
